# EUROPEAN PATENT APPLICATION

(11) **EP 2 990 772 A1**
(43) Date of publication of application: **02.03.2016**
(21) Application number: 14182920.0
(22) Date of filing: 29.08.2014
(51) Int. Cl.: G01L 3/14

(54) **Magnetoelastic torque sensor system for drive train, drive train, method of measuring torque in a drive train, method of operating a drive train and method of manufacturing a primary sensor unit**

(71) Applicant: Methode Electronics Malta Ltd., Mriehel BKR3000 (MT)
(72) Inventor: Giessibl, Johannes, 83123 Amerang (DE); Müller, Florian, 81379 München (DE)
(74) Representative: Prinz & Partner mbB

(57) **Abstract**

A magnetoelastic torque sensor system (10) for a drive train (12) is described which comprises a primary sensor unit (14) having at least one magnetoelastic portion (40) formed by a magnetoelastic material for reacting on an occurring stress due to torque generated by an engine (20), particularly torque contribution of an individual cylinder (22) of an engine (20). The magnetoelastic material is configured to generate a magnetic field and/or alternate an already existing magnetic field in response to the stress. The magnetoelastic torque sensor system (10) also comprises a secondary sensor unit (16) having at least one magnetic sensitive part (18), in particular a fluxgate, which measures the generated magnetic field or the alternating magnetic field of the magnetoelastic portion (40). The magnetoelastic torque sensor system (10) also comprises an electronic control unit (32) for receiving and processing the signals provided by the secondary sensor unit (16), wherein the electronic control unit (32) in particular controls and/or reads out the at least one magnetic sensitive part (18) of the secondary sensor unit (16) and generates a signal which correlates with the stress applied to the primary sensor unit (14). Further, a drive train (12), a method of measuring torque in a drive train (12), a method of operating a drive train (12) and a method of manufacturing a primary sensor unit (16) are described.

## Description

### FIELD OF THE INVENTION

The present invention relates to torque sensor systems which measure a torque generated by an engine.

The invention also relates to a drive train to be coupled to an engine for transmitting the generated torque.

Further, the invention relates to a method of measuring torque in a drive train which is arranged between an engine and a gear box.

Additionally, the invention relates to a method of operating a drive train.

The invention further relates to a method of manufacturing a primary sensor unit.

### BACKGROUND OF THE INVENTION

It is known in the prior art that an optimal gear shift point of a transmission varies with the varying total torque generated by an engine. The generated total torque depends on the torque contribution of each individual cylinder of the engine which is transmitted via a crank shaft to a transmission or a gearbox where it is measured.

However, the total torque generated by the engine is measured or calculated theoretically in order to determine the optimal gear shift point of the transmission coupled to the engine by the drive train.

The calculated total torque is influenced by drifting of auxiliary equipment of the drive train which is connected to the crank shaft. Hence, the calculated torque is quite accurate, but it is not exact as the auxiliary consumption cannot be taken into consideration accurately.

Typically, strain gauges are used to measure the total torque. These strain gauges are directly applied on a driving shaft of the drive train which transmits the torque to the gearbox wherein the driving shaft is coupled to the crank shaft. Due to a torque-induced strain, the strain gauges change their resistance wherein the change in resistance is measured and analyzed in order to determine the occurring torque. As these strain gauges are relatively unstable and of limited reliability, contactless sensors have been developed which measure the total torque in a contactless manner.

However, all these sensors and sensor systems have been used to detect the total torque and its variation in order to determine the optimal gear shift point of the transmission.

It is an object of the present invention to provide a torque sensor system being applicable to measure the torque generated in the engine such that information about the engine itself and its individual cylinders is gained.

### SUMMARY OF THE INVENTION

The object of the present invention is achieved by a magnetoelastic torque sensor system for a drive train comprising a primary sensor unit having at least one magnetoelastic portion formed by a magnetoelastic material for reacting on an occurring stress due to torque generated by an engine, particularly due to torque contribution of an individual cylinder of an engine, wherein the magnetoelastic material is configured to generate a magnetic field and/or alternate an already existing magnetic field in response to the stress, wherein the magnetoelastic torque sensor system further comprises a secondary sensor unit having at least one magnetic sensitive part, in particular a fluxgate, which measures the generated magnetic field or the alternating magnetic field of the magnetoelastic portion, and wherein the magnetoelastic torque sensor system also comprises an electronic control unit for receiving and processing the signals provided by the secondary sensor unit, wherein the electronic control unit in particular controls and/or reads out the at least one magnetic sensitive part of the secondary sensor unit and generates a signal which correlates with the stress applied to the primary sensor unit.

The magnetoelastic torque sensor system can detect the torque generated by the engine such accurately and quick that the contribution peaks of the individual cylinders of the engine can be determined. The individual contributions can be analyzed in order to gain information about the engine and its status. For example, misfiring and knocking of an individual cylinder can be detected as well as life time changes of the cylinders, in particular wear and tear. By determining and analyzing the measured torque, upcoming errors can be detected before a fatal error occurs. In general, the accuracy of the sensor system is very high permitting the detection of the torque contribution of each individual cylinder to the total torque. Therefore, part-to-part variation does not need to be taken into account anymore because the torque can be measured directly. Generally, the magnetoelastic material reacts on a stress by generating or alternating a magnetic field which magnitude is proportional to the stress applied to the primary sensor unit. The electronic control unit (ECU) processes the signals provided by the secondary sensor unit and generates an appropriate signal.

Further, an engine/gearbox electronic control unit can be provided which communicates with the electronic control unit, in particular receives the signal generated by the ECU, and provides information for the driver or a mechanic about the status of the engine and its individual cylinders. The engine/gearbox electronic control unit generates a signal which may be used to inform a driver or a mechanic about the status of the engine and upcoming errors.

The electronic control unit can be integrated in the secondary sensor unit in order to have a compact arrangement.

Alternatively, the electronic control unit can be arranged outside the secondary sensor unit. This can be advantageous since the electronic control unit is more susceptible as the secondary sensor unit. The constructional separation of these two components prevents the electronic control unit from the hot engine.

According to an aspect of the invention, the primary sensor unit may be applied within the flux of forces of the drive train. The generated torque is transmitted to the primary sensor unit directly which is part of the drive train. This ensures that the torque generated can be detected by the sensor unit.

Particularly, the primary sensor unit can be a flexplate. Typically, the flexplate is an almost torsion proof element which couples the crank shaft of the engine with a driving shaft or a torque converter. The flexplate is normally made by metal sheet. Hence, the primary sensor is integrated into an element which is used in the drive train anyway. In other words, no additional element has to be applied to the drive train when the primary sensor is integrated into the flexplate.

According to another aspect of the invention, the primary sensor unit is shaped as a disk and the at least one magnetoelastic portion is formed as a closed ring on the disk shaped primary sensor unit. The magnetic circuit of the magnetoelastic portion is closed along the ring which ensures the formation of a magnetic field by a deformation of the magnetoelastic portion due to stress.

Further, the primary sensor unit may comprise several magnetoelastic portions which, in particular, have alternating oppositely polarized magnetizations. These portions define a magnetoelastic active region of the primary sensor unit. The sensing signal which is generated by the primary sensor unit is intensified by the several magnetoelastic portions. Usage of magnetoelastic portions having alternating oppositely polarized magnetizations is preferred for intensifying the output signal as the magnetic field change is higher due to the alternating oppositely polarized magnetizations. The several magnetoelastic portions are all formed as closed rings having different diameters.

According to another aspect of the invention, the magnetizations of the primary sensor unit are formed such that the net magnetization is zero when the primary sensor unit is not stressed. This ensures that the secondary sensor unit only detects a magnetic signal when the primary sensor unit is stressed due to an applied torque.

In other words, the flexplate can be a disk-shaped member including a magnetoelastically active, ferromagnetic, inverse magnetostrictive region which is magnetically polarized in a single circumferential direction and possesses sufficient magnetic anisotropy to return the magnetization in the region, following the application of torque to the member, to the single circumferential direction when the applied force is reduced to zero.

The primary sensor unit may be configured to be coupled into the drive train between an engine and a torque converter, a clutch or a gear box, in particular of a motor vehicle as a car, bike or truck. Due to the direct coupling, the magnetoelastic torque sensor system can detect the generated torque directly such that torque peaks of the individual cylinders of the engine can be monitored.

The primary sensor unit may be configured such that it can be coupled to the crank shaft directly. This is the easiest way to couple the magnetoelastic torque sensor system to the engine and the individual cylinders as the crank shaft is connected to each cylinder of the engine and transmits the generated torque to the clutch or the transmission. Further, this ensures that the primary sensor unit measures the generated torque directly as no other parts are coupled between the primary sensor unit and the engine which may have an influence on the torque due to oscillations or damping for example.

According to another aspect of the invention, the primary sensor unit being shaped as a disk is configured such that an inner perimeter is couple able to the crank shaft wherein an outer perimeter is couple able to another shaft or another part of the drive train, in particular a driving shaft being driven by the crank shaft. For example, the outer perimeter can be coupled to a driving shaft, a clutch or a housing of a converter. This configuration ensures that the magnetoelastic torque sensor system is used such that the primary sensor is arranged within the flux or forces of the drive train.

The primary sensor unit being shaped as a disk has a thickness of less than 10 mm, in particular less than 5 mm. This thickness of the disk is sufficient to generate a magnetic field which is high enough to be detected by the secondary sensor unit. The primary sensor unit being applied within the flux or forces of the drive train has no negative influence on the occurring torque generated by the engine. Further, the required axial extension of the drive train is very small or zero.

According to another aspect of the invention, the primary sensor unit may be attached directly to any kind of flywheel. Therefore, the primary sensor unit detects the generated torque of the engine before it is damped by the flywheel. Since the resolution and speed of the magnetoelastic torque sensor system is very high, the torque contribution of each individual cylinder can be detected.

Further, the primary sensor unit can be a press-hardened element. This ensures that the occurring torques and forces can be absorbed by the primary sensor unit. This also enables an easy manufacturing as the primary sensor unit is formed and hardened, simultaneously. Typically, disk-shaped flexplates are manufactured by deep-drawing processes. Afterwards, the flexplates are hardened by nitriding and then they have to be reworked, in particular by polishing, milling and/or drilling. These several steps can be reduced in an economic way while manufacturing the sensor unit by press-hardening. Further, this also ensures that the primary sensor unit is almost torsion proof. Magnetoelastic materials for this process are X20Cr13 (DIN 1.4021), X39CR13 (DIN 1.4031) and X46Cr13 (DIN 1.4034) or any other magnetoelastic active material which is processible as sheet metal.

Further, the invention relates to a drive train to be coupled to an engine, comprising a gear box, a driving shaft and a magnetoelastic torque sensor system wherein the driving shaft transmits a generated torque from the engine to the gear box and wherein the magnetoelastic torque sensor system is arranged between the engine and the gear box. According to the configuration of the drive train, the magnetoelastic torque sensor system can detect and monitor the torque generated by the engine before it is changed within the gear box or influenced by the driving shaft. The individual torque contribution of the several cylinders can be detected due to the high accuracy and speed of the torque sensor system.

An engine/gearbox electronic control unit is possible which controls the gear box in accordance to the determined torque such that optimal gearshift points are obtained.

The primary sensor unit may directly be coupled to the driving shaft. The primary sensor unit may be used for coupling the crank shaft of the engine to a driving shaft of the drive train. This ensures that the generated torque is detected directly.

According to another aspect of the invention, the driving shaft is split into at least two parts, particularly a crank shaft part and a gear box part, such that the primary sensor unit is arranged between the two parts of the driving shaft, in particular directly mounted to the crank shaft part. This also permits an accurate measurement of the torque as only the crank shaft part of the drive train is arranged between the cylinders and the primary sensor unit.

Further, a clutch may be provided which is arranged between the driving shaft and the gear box, particularly between the gear box part of the driving shaft and the gear box. Due to the detection of the torque generated, the exact coupling/uncoupling point of the clutch can be determined by analyzing the total torque as well as the individual contributions of each cylinder.

According to another aspect of the invention, the electronic control unit is formed such that the electronic control provides a signal to determine the coupling/uncoupling point of the clutch in dependence of the generated signal in order to reduce the wear and/or tear of the clutch. Hence, the lifetime of the clutch can be extended as the wear of the clutch is reduced when it is operated based on the torque measured.

Another aspect of the invention relates to a method of measuring torque in a drive train which is arranged between an engine and a gear box and has a magnetoelastic torque sensor system comprising the following steps:
- generating a magnetic field and/or alternating a magnetic field by a primary sensor unit which has at least one magnetoelastic portion which is formed by a magnetoelastic material for reacting on an occurring stress due to torque in the drive train,
- measuring the generated magnetic field or the alternating magnetic field of the magnetoelastic portion with a secondary sensor unit arranged opposite/adjacent to the primary sensor unit, wherein
- determining torque based on the measured magnetic field, in particular the torque contribution of each individual cylinder of the engine.

The torque is measured with a high accuracy and speed enabling a high resolution of the torque generated by the engine. Hence, information of the individual cylinders and their status can be obtained and analyzed.

Further, the method comprises determining an individual torque contribution of a cylinder of the engine based on the measured magnetic signal. This exact determination is possible as the magnetoelastic torque sensor system has a very high resolution and speed permitting to detect the individual contribution of the cylinders to the total torque.

The method may further determine firing, misfiring, knocking, wear, tear and/or oscillation of the engine, in particular of each individual cylinder of the engine. According to the torque detected by the sensor system, torque contributions of the individual cylinders can be determined as misfiring or knocking. Further, life time changes can be detected such as wear and tear which may cause a fatal error soon. The detection of these life time changes enables the possibility to warn the driver and/or a mechanic at an early stage such that an upcoming problem may be fixed in advance.

According to another aspect of the invention, the engine is operated in response to the determined torque. This ensures a smooth operation of the engine resulting in a smoother torque and higher comfort.

Further, the occurring torque may be analyzed to determine an optimal coupling/decoupling point of the clutch in dependence of the measured torque. This reduces the life time changes of the clutch, in particular the wear, ensuring a longer lifetime of the clutch.

Moreover, gear switching may be performed in dependence of the measured torque. A smoother operation of the vehicle is ensured as the shifting operation is less noticeable. This increases the comfort.

Another aspect of the invention relates to a method of operating a drive train wherein a method of measuring torque as described above is executed such that the engine, the drive train, the gearbox, a clutch or a torque converter is operated based on the measured torque. This ensures to detect life time changes of the components used within a drive train or the engine, in particular the individual cylinders. Further, the operation of the drive train, the engine, the clutch, the gearbox or the torque converter can be adjusted such that the CO₂ output is reduced. In addition, the operation can be executed such that the wear and tear is reduced in order to increase the life time.

Another aspect of the invention relates to a method of manufacturing a primary sensor unit of a magnetoelastic torque sensor system wherein a metal is press hardened, in particular a metal comprising X46Cr13. This ensures a development time reduction as an easy manufacturing is obtained. The primary sensor unit is formed and hardened, simultaneously.

### BRIEF DESCRIPTION OF THE DRAWINGS

Figure 1 is a perspective view of the main components of the magnetoelastic torque sensor system according to the present invention.
Figure 2 is a schematic view of a drive train according to the present invention.
Figure 3 is a diagram showing the signal detected by the magnetoelastic torque sensor system according to the invention.
Figure 4 is another diagram showing the signal detected by the magnetoelastic torque sensor system according to the invention.
Figure 5 is another diagram showing the signal detected by the magnetoelastic torque sensor system according to the invention.
Figure 6 is another diagram showing the signal detected by the magnetoelastic torque sensor system according to the invention.
Figure 7 is another diagram showing the signal detected by the magnetoelastic torque sensor system according to the invention.
Figure 8 is a schematic overview illustrating the control circuit.

### DETAILED DESCRIPTION OF THE PREFERRED EMBODIMENT

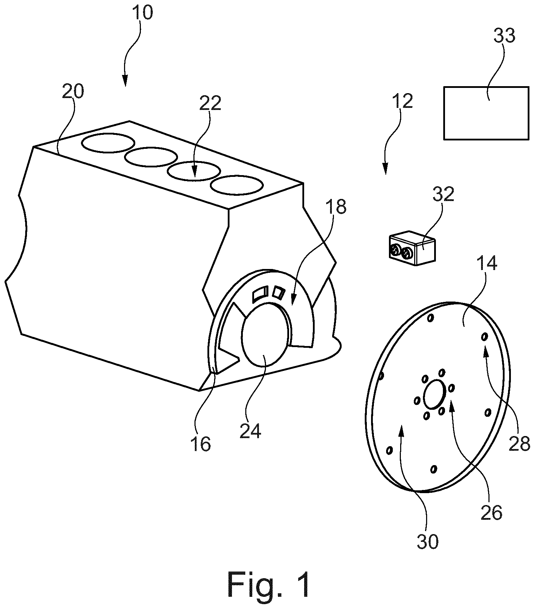

Figure 1 shows a magnetoelastic torque sensor system 10 for a drive train 12 which is partly shown.

The magnetoelastic torque sensor system 10 comprises a primary sensor unit 14 being shaped as a disk and a secondary sensor unit 16 having at least one magnetic sensitive part 18 which may be formed by a fluxgate.

Alternatively, the magnetic sensitive part 18 may be formed by one of a Hall-effect, magneto-resistance, magneto-transistor, magneto-diode or MAGFET field sensors.

Further, an engine 20 having four cylinders 22 is shown which are connected with a crank shaft 24 transmitting the torque generated by the engine 20 to the drive train 12, in particular a driving shaft of the drive train, which may couple the engine 20 with a clutch, a gearbox or a torque converter. In the context of this specification, a driving shaft is the generic term for each element which couples the crank shaft 24 with an appropriate component such as a clutch, a gearbox or a torque converter in order to transmit the torque generated by the engine 20. For example, an interface of a torque converter directly coupled to the crank shaft 24 can be at least a part of the driving shaft.

The secondary sensor unit 16 is directly coupled to the engine 20, in particular the housing of the engine 20, and detects a change of an already existing magnetic field or the formation of a magnetic field within the primary sensor unit 14 which will be explained later.

The primary sensor unit 14 according to the shown embodiment is a flexplate which is directly coupled to the crank shaft 24 via an inner perimeter 26. The primary sensor unit 14 further has an outer perimeter 28 which may be coupled to a part of the drive train 12, for example a driving shaft being driven by the crank shaft 24. Hence, the primary sensor unit 14 is not disposed at the gear box or other parts of the drive train 12, but as close as possible to the engine 20 in order to gain information about the torque generated by the engine 20 in an uninfluenced way.

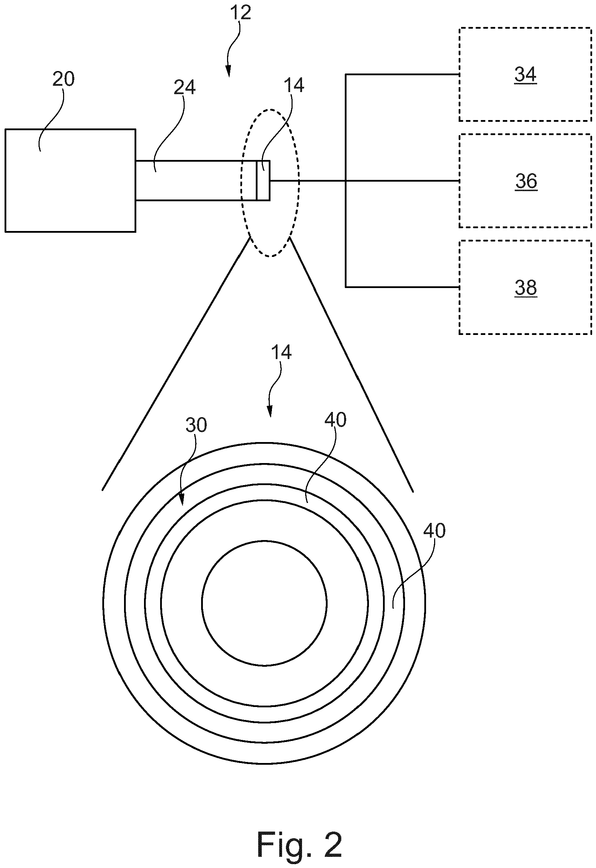

Generally, the primary sensor unit 14 is made of a torsion proof material for example a metal, in particular a ferromagnetic material. The primary sensor unit 14 can be a press-hardened element which has a magnetoelastic active region 30. The press-hardened formation ensures that the primary sensor unit 14 is torsion proof and it, further, accelerates the manufacturing process. The material may be X46Cr13 (DIN 1.4034). The primary sensor unit 14 and its magnetoelastic active region 30 are shown in Figure 2 in more detail.

Further, the magnetoelastic torque sensor system 10 comprises an electronic control unit (ECU) 32 which is coupled to the secondary sensor unit 16 such that the output signal of the secondary sensor unit 16 is transmitted to the electronic control unit 32 and processed within the ECU 32. After processing the received signals, the ECU 32 may generate messages or provide information which can be read out by a mechanic or which can be shown to the driver of the vehicle or processed by an engine/gearbox ECU 33. The electronic control unit 32 of the magnetoelastic torque sensor system 10 can be coupled to the engine/gearbox ECU 33. The messages inform the mechanic or the driver about the status of the vehicle, in particular the drive train 12, the engine 20 and its individual cylinders 22.

Figure 2 shows the drive train 12 schematically, which comprises the magnetoelastic torque sensor system 10.

In Figure 2 several options are shown to which the primary sensor unit 14 can be coupled via its outer perimeter 28; for example a clutch 34, a torque converter 36 or a gear box 38.

Further, the primary sensor unit 14 is shown in more detail, in particular the magnetoelastic active region 30.

The magnetoelastic active region 30 of the primary sensor unit 14 comprises several magnetoelastic portions 40 which are formed by a magnetoelastic material. Each magnetoelastic portion 40 is formed as a closed ring wherein the rings distinguish from each other because of their radial positions and their diameters.

Adjacent magnetoelastic portions 40 have alternating oppositely polarized magnetizations. The magnetoelastic portions 40 are magnetized such that the net magnetization of the magnetoelastic active region 30 is zero when the primary sensor unit 14 is not stressed by a torque generated by the engine 20.

Generally, the magnetoelastic material reacts on a stress by forming or changing a magnetic field which is measured by the secondary sensor unit 16, in particular its magnetic sensitive part 18.

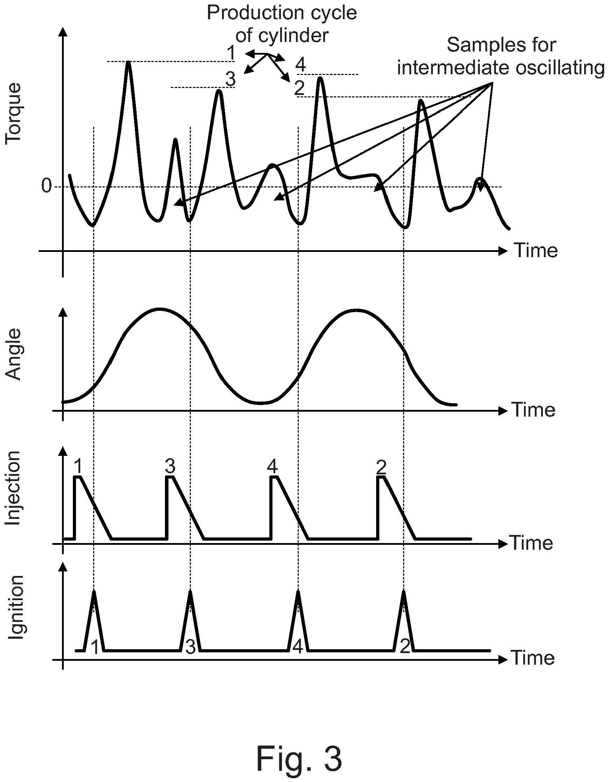

In Figures 3 to 7, several diagrams are shown illustrating output signals of the electronic control unit 32 representing the generated torque of the engine 20. An individual torque contribution of each cylinder 22 of the engine 20 can be determined based on the measured magnetic signal of the magnetoelastic active region 30.

Figure 3 shows the signal of the engine 20 comprising four cylinders 22 which are working well. The ignition of each cylinder 22 and the appropriate torque due to the ignition of each cylinder 22 are shown wherein normal intermediate oscillations of the crank shaft 24 occur which are also shown. These oscillations do not have any negative influence on the overall torque and the components of the drive train 12.

As the engine/gearbox ECU 33 controls the operation of the engine 20, the injection of diesel or gasoil into each of the cylinders 22 is also monitored and these signals can be compared to the signals detected by the ECU 32.

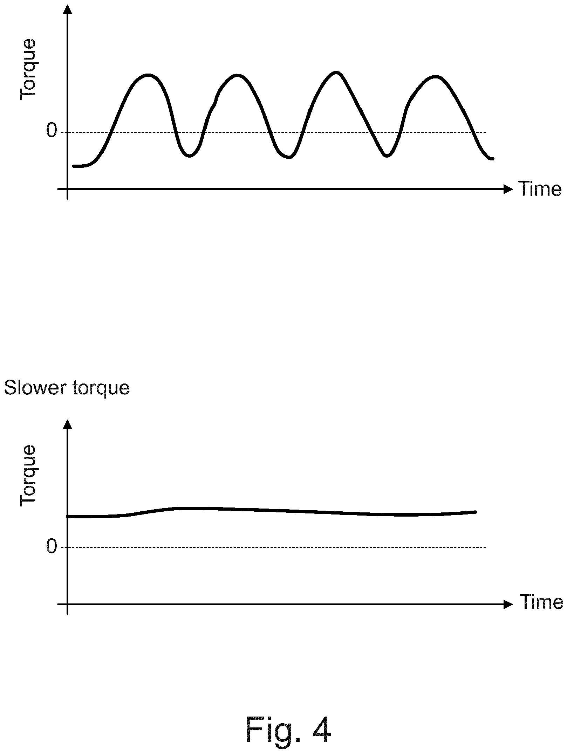

Figure 4 shows an overview of different filtered signals of the secondary sensor unit 16. The shown signals represent a torque generated by the engine 20 which is identical to the one shown in Figure 3. However, the signals shown in Figure 4 were filtered differently in order to get smoother signals.

The signals are filtered such that small oscillations were cushioned, which do not have any negative influence on the characteristics of the engine 20. Hence, the output signal can be monitored and analyzed easier by the engine/gearbox ECU 33 (upper diagram).

The lower diagram is filtered extremely as only an almost average total torque is shown which cannot be used for determining the status of each individual cylinder 22. However, such a diagram represent the calculated torque or the measured total torque and its variation according to the prior art.

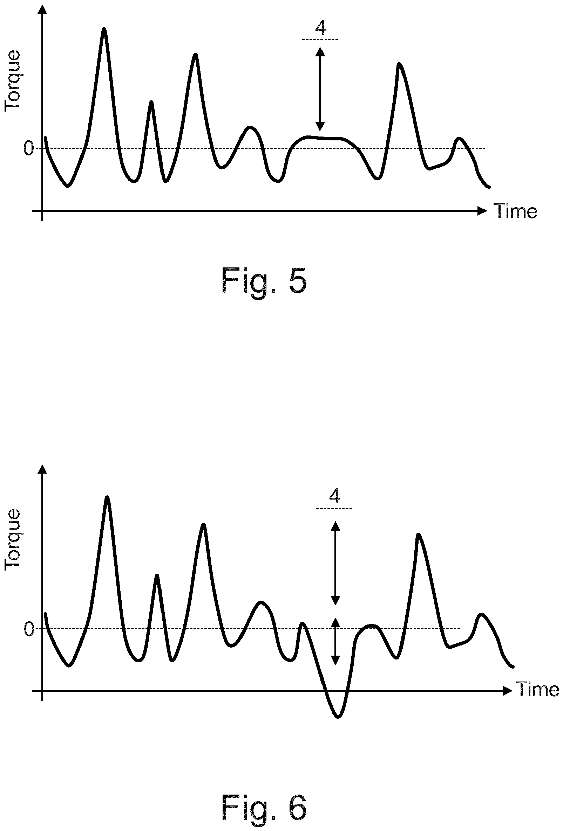

In Figure 5, the torque generated and measured by the torque sensor system 10 is shown wherein a misfiring of the fourth cylinder 22 of the engine 20 is detected.

Within a certain time frame no torque contribution or torque peak of a cylinder has been detected. The engine/gearbox ECU 33 will determine such a signal as a misfiring of the appropriate cylinder 22. As the engine/gearbox ECU 33 controls the operation of the engine 20, in particular the ignition and injection of each individual cylinder 22, the engine/gearbox ECU 33 can indicate the fourth cylinder 22 as the one which has misfired. This information can be written into a storage of the engine/gearbox ECU 33 which is read out by a mechanic during the next service. If such a misfiring of one certain cylinder 22 is detected by engine/gearbox ECU 33 frequently, the engine/gearbox ECU 33 can also send a warning message to the driver directly and inform him, accordingly. Such a message may be shown on a display of the vehicle and prevents the engine 20 from a fatal error if the driver reacts on the warning message.

In Figure 6, the torque generated and detected by the torque sensor system 10 is shown wherein a knocking of the fourth cylinder 22 is detected. The torque contribution of a cylinder 22 has a negative value to the total torque which is representative for a knocking of a cylinder 22. The engine/gearbox ECU 33 will also determine the fourth cylinder 22 as the one which is not working well. As knocking can also damage the engine 20, the information about the knocking will be stored in the storage of the engine/gearbox ECU 33. However, when such a knocking is detected frequently, a warning message can be displayed in order to warn the driver.

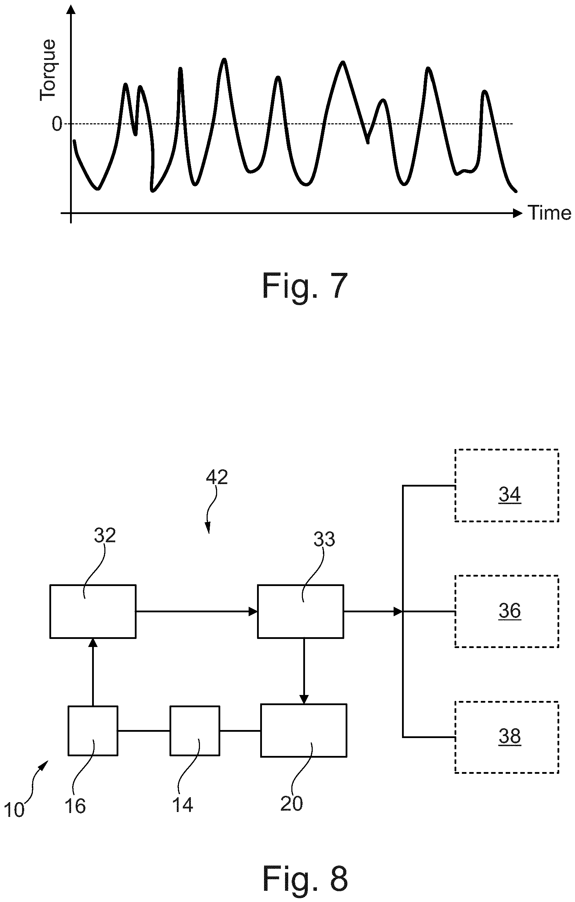

In Figure 7, the torque generated and detected by the torque sensor system 10 is shown wherein heavy oscillations are detected. Such heavy oscillations indicate that a fatal error will occur soon. Therefore, the engine/gearbox ECU 33 will warn the driver at once in order to prevent the engine 20 from damage.

In general, the magnetoelastic torque sensor system 10 as well as the drive train 12 provides the possibility to drive train manufacturers to improve the engine control. Further, the gear box and clutch control can also be improved. Misfiring and knocking as well as the wear and tear in the engine 20, the drive train 12 and its components can be detected before a fatal error occurs which damages the engine 20.

Hence, the application of drive trains 12 and engines 10 during the development stage can be accelerated.

In general, the engine 20 can be controlled such that it is operated smoother based on the torque measured. Further, the gear switching and clutch operation can be realized with more comfort and without jerk as the control of the transmission 38 and clutch 34 is also based on the torque measured.

The inventive torque sensor system 10 provides a feasible torque sensing system comprising the primary sensor unit 14 which can be applied to the flexplate and, therefore, directly mounted on the crank shaft 24. Alternatively, the primary sensor unit 14 may be attached to or integrated into a flywheel which can be connected to the crank shaft 24.

The signal dynamics of the magnetoelastic sensing is superior to any other sensing technology, in particular strain gauges or SAW (surface acoustic wave). The available torque sensor signal provides the possibility to directly detect the torque contribution of each individual cylinder 22 of the engine 20. Hence, misfiring and knocking of the individual cylinders 22 can be detected. As the output signal can be analyzed in more detail, fatal errors within the drive train 12 can be detected in advance.

Further, life time changes of the components of the engine 20 and the drive train 12 can also be monitored and supervised.

Therefore, the driver and/or the mechanic can be warned such that the worn component can be interchanged and/or the setting of the engine 20 can be adjusted, accordingly.

In general, this also provides a real time adjustment of the CO₂ output as the engine/gearbox ECU 33 controls the engine 20 and the drive train 12 as well as its components based on the signal measured.

In Figure 8 a control circuit 42 is schematically shown which is formed by the magnetoelastic torque sensor system 10, the engine 20 and the engine/gearbox ECU 33. The magnetoelastic torque sensor system 10 comprises the primary sensor unit 14, the secondary sensor unit 16 and the ECU 32 of the magnetoelastic torque sensor system 10. The control circuit 42 works as follows:
The magnetoelastic torque sensor system 10 measures a torque generated by the engine 20 such accurately that the torque contribution of the individual cylinders 22 can be determined. During operation, the primary sensor unit 14 is stressed by the occurring torque such that a magnetic field is generated or an already existing magnetic field is alternated.

The secondary sensor unit 16 detects the magnetic field or the change of the already existing magnetic field and transmits a corresponding signal to the ECU 32.

The ECU 32 analyzes the magnetic field detected by the secondary sensor unit 16 and determines the torque as well as the torque contribution of each individual cylinder 22.

Further, this information is transmitted to the engine/gearbox ECU 33 which controls the operation of the engine 20. According to the information received by the ECU 32, the engine/gearbox ECU 33 may control the engine 20. Therefore, a continuous and immediate control of the engine 20 can be obtained based on the torque generated by the engine 20.

In addition, the engine/gearbox ECU 33 may also control the clutch 34, the torque converter 36 or the gear box 38 based on the information received relating to the torque generated.

Hence, the control circuit 42 ensures that the CO₂ output can be reduced due to the live adjustment of the engine operation. Further, wear and tear of the components can also be reduced as the engine/gearbox ECU 33 controls the operation of these components such that a smooth operation is obtained.

## Claims

1. A magnetoelastic torque sensor system (10) for a drive train (12) comprising:
a primary sensor unit (14) having at least one magnetoelastic portion (40) formed by a magnetoelastic material for reacting on an occurring stress due to torque generated by an engine (20), particularly torque contribution of an individual cylinder (22) of an engine (20), wherein the magnetoelastic material is configured to generate a magnetic field and/or alternate an already existing magnetic field in response to the stress,
a secondary sensor unit (16) having at least one magnetic sensitive part (18), in particular a fluxgate, which measures the generated magnetic field or the alternating magnetic field of the magnetoelastic portion (40), and
an electronic control unit (32) for receiving and processing the signals provided by the secondary sensor unit (16), wherein the electronic control unit (32) in particular controls and/or reads out the at least one magnetic sensitive part (18) of the secondary sensor unit (16) and generates a signal which correlates with the stress applied to the primary sensor unit (14).

2. A magnetoelastic torque sensor system (10) according to claim 1, **characterized in that** the primary sensor unit (14) is a flexplate.

3. A magnetoelastic torque sensor system (10) according to claim 1 or 2, **characterized in that** the primary sensor unit (14) is applied within the flux of forces of the drive train (12), in particular the primary sensor unit (14) is configured such that it is coupled into the drive train (12) between an engine (20) and a torque converter (36), a clutch (34) or a gearbox (38), in particular of a motor vehicle as a car, bike or truck.

4. A magnetoelastic torque sensor system (10) according to any of the claims 1 to 3, **characterized in that** the primary sensor unit (14) is shaped as a disk and the at least one magnetoelastic portion (40) is formed as a closed ring of the disk shaped primary sensor unit (14), wherein in particular the primary sensor unit (14) comprises several magnetoelastic portions (40) which, in particular, have alternating oppositely polarized magnetizations wherein preferably the magnetizations of the primary sensor unit (14) are formed such that the net magnetization is zero when the primary sensor unit (14) is not stressed.

5. A magnetoelastic torque sensor system (10) according to any of the preceding claims, **characterized in that** the primary sensor unit (14) formed as a disk is configured to be coupled to a crank shaft (24) directly wherein in particular an inner perimeter (26) of disc is couple able to the crank shaft (24) wherein an outer perimeter (28) is coupled to another shaft and/or to a fly wheel or a torque converter (36).

6. A magnetoelastic torque sensor system (10) according to any of the preceding claims, **characterized in that** the primary sensor unit (14) is a press-hardened element wherein in particular the primary sensor unit (14) being formed as a disk has a thickness of less than 10 mm, in particular less than 5 mm.

7. A drive train (12) to be coupled to an engine (20), comprising a gearbox (38), a driving shaft and a magnetoelastic torque sensor system (10) according to any of the preceding claims wherein the driving shaft transmits a generated torque from the engine (20) to the gearbox (38) and wherein the magnetoelastic torque sensor system (10) is arranged between the engine (20) and the gearbox (38).

8. A drive train (12) according to claim 7, **characterized in that** the primary sensor unit (14) is directly coupled to the driving shaft, wherein in particular the driving shaft is split into at least two parts, particularly a crank shaft part and a gearbox part, such that the primary sensor unit (14) is arranged between the two parts of the driving shaft, in particular directly mounted to the crank shaft (24).

9. A drive train (12) according to any of the claims 7 to 8, **characterized in that** a clutch (34) is provided which is arranged between the driving shaft and the gearbox (38), particularly between the gearbox part of the driving shaft and the gearbox (38), wherein the electronic control unit (32) is particularly formed such that the electronic control unit (32) provides a signal to determine the coupling/uncoupling point of the clutch (34) in dependence of the generated signal in order to reduce the wear and/or tear of the clutch (34) .

10. A method of measuring torque in a drive train (12) which is arranged between an engine (20) and a gearbox (38) and has a magnetoelastic torque sensor system (10) comprising:
generating a magnetic field and/or alternating a magnetic field by a primary sensor unit (14) which has at least one magnetoelastic portion (40) which is formed by a magnetoelastic material for reacting on an occurring stress due to torque in the drive train (12),
measuring the generated magnetic field or the alternating magnetic field of the magnetoelastic portion with a secondary sensor unit (16) arranged opposite/adjacent to the primary sensor unit (14), wherein
determining torque based on the measured magnetic field, in particular the torque contribution of each individual cylinder (22) of the engine (20).

11. A method of measuring torque in a drive train (12) according to claim 10, with the following step: determining an individual torque contribution of a cylinder (22) of the engine (20) based on the measured magnetic signal.

12. A method of measuring torque in a drive train (12) according to claim 10 or 11, with the following step: determining firing, misfiring, knocking, wear, tear and/or oscillation of the engine (20), in particular of each individual cylinder (22) of the engine (20).

13. A method of measuring torque in a drive train (12) according to any of the claims 10 to 12, with the following step: operating the engine (20) in response to the determined torque and/or gear switching is performed in dependence of the measured torque and/or wherein the drive train (12) also comprises a clutch (34) and wherein the occurring torque is analyzed to determine an ideal coupling/decoupling point of the clutch (34) in dependence of the measured torque.

14. A method of operating a drive train (12), wherein a method of measuring torque according to any of the claims 10 to 13 is executed such that the engine (20), the drive train (12), the gearbox (38), a clutch (34) or a torque converter (37) is operated based on the measured torque.

15. A method of manufacturing a primary sensor unit (16) of a magnetoelastic torque sensor system (10) wherein a metal is press hardened, in particular a metal comprising and/or consisting of X46Cr13.
